# EUROPÄISCHE PATENTSCHRIFT

(11) **EP 0 265 698 B1**
(45) Veröffentlichungstag und Bekanntmachung des Hinweises auf die Patenterteilung: **30.03.1994**
(21) Anmeldenummer: 87114294.9
(22) Anmeldetag: 30.09.1987
(51) Int. Cl.: H02B 1/20

(54) **Verbindungsvorrichtung für die elektrische Verbindung von elektrischen Anschlüssen von Elektrogeräten**
Connection device for the electrical connection of the connection points of electrical apparatuses
Dispositif de connexion pour la connexion électrique des branchements d'appareils électriques

(30) Priorität: 30.09.1986 DE 3633218
(43) Veröffentlichungstag der Anmeldung: 04.05.1988
(73) Patentinhaber: Bekhiet, Fauzi, D-74523 Schwäbisch Hall (DE)
(72) Erfinder: Bekhiet, Fauzi, D-74523 Schwäbisch Hall (DE)
(74) Vertreter: Melzer, Wolfgang, Dipl.-Ing.

(56) Entgegenhaltungen:
- EP-A- 0 093 398
- EP-A- 0 209 691
- GB-A- 2 139 017

## Beschreibung

Die Erfindung betrifft eine Verbindungsvorrichtung für die elektrische Verbindung von elektrischen Anschlüssen von Elektrogeräten mittels hieren passende Steckanschlüsse aufweisenden Anschlußkabeln.

Im Laufe der Zeit haben sich weltweit verschiedene Steckanschluß-Normen entwickelt, wie die Mehrpolstecker gemäß DIN, Klinkenstecker, Lautsprecherstecker, Cynch-Stecker, und andere. Zur Verbindung von mit solchen Steckern bzw. Steckerbuchsen versehenen Elektrogeräten sind entsprechende Anschlüsse aufweisende Verbindungskabel erforderlich. Dies bereitet keine Schwierigkeiten, sofern beide Geräte gemäß gleicher Norm ausgerüstet sind. Dies kann in der Praxis jedoch nicht gewährleistet werden. Sind jedoch zu verbindende Elektrogeräte gemäß unterschiedliche Normen ausgerüstet, so sind bisher Verbindungskabel erforderlich gewesen, deren Enden mit den jeweiligen Normen entsprechenden Anschlüssen versehen sind. Dies hat zu einer verwirrenden Fülle von unterschiedlich ausgerüsteten Verbindungskabeln geführt. Für die derartige Verbindungskabel bereitstellende Zubehörindustrie ist ein erheblicher Aufwand erforderlich, um alle Wünsche der Verbraucher erfüllen zu können. Ferner ist eine erhebliche Lagerhaltung erforderlich. Darüber hinaus sind die Stückzahlen vergleichsweise niedrig, so daß die Verbindungskabel entsprechend kostspielig sind. Abgesehen davon ist der Erwerb der entsprechenden Verbindungskabel für den Verbraucher nicht einfach, da er sich über die unterschiedlichsten Normen informieren muß.

Zur Überwindung dieses Problems schlägt die nach Art. 54(3) EPÜ zu berücksichtigende EP-A-0 209 691 vor, zunächst Anschlußkabel zu verwenden, an deren einem Ende der jeweiligen Norm entsprechende Anschlüsse vorgesehen sind, und deren anderes Ende stets mit der gleichen Art von Anschlüssen versehen ist, nämlich sogenannten Kupplungselementen. Ferner wird ein Verbinder vorgeschlagen, in den beidseitig die jeweiligen Kupplungselemente einsteckbar sind, wobei mittels einer innerhalb des Verbinders vorgesehenen Platine nach Art einer gedruckten Schaltung (oder auch auf andere Weise) eine elektrische Verbindung zwischen sich gegenüberliegenden Anschlußenden der Kontaktelemente möglich ist.

Das Verbindergehäuse eines Verbinders und damit auch die entsprechende Platine kann dabei so ausgebildet sein, daß mehr als ein Kupplungselement einsteckbar sind.

Es hat sich nun gezeigt, das dieses System nach EP-A-0 209 691 in weitem Bereich anwendbar ist, insbesondere bei der Verbindung von Audio- oder Videogeräten. Es gibt jedoch eine Anzahl von insbesondere elektronischen Geräten, bei denen eine wesentlich größere Anzahl von Anschlüssen verschiedener Geräte miteinander zu verbinden sind. Dies ist insbesondere bei Geräten der Datenverarbeitung der Fall. Bei solchen Geräten besteht jedoch ebenfalls der Wunsch nach Verbindungsvorrichtungen, die wegen vereinfachter Herstellbarkeit und verringerter Lagerhaltung sowie normübergreifender Ausbildung verbraucherfreundlich sind. Dieses Problem läßt sich durch Verbindungsvorrichtungen gemäß EP-A-0 209 691 nicht in allen Fällen auf einfache Weise überwinden. Denn insbesondere bei der Verbindung von Datengeräten (Datenendgeräten) unterschiedlicher Hersteller sind darüber hinaus noch firmeninterne Normen, insbesondere hinsichtlich der Signalcodierung zu beachten, die in aller Regel nicht kompatibel sind.

Ausgehend davon ist es Aufgabe der vorliegenden Erfindung, die Verbindungsvorrichtung gemäß EP-A-0 209 691 so weiterzubilden, daß sie auch bei der Verbindung von elektrischen Geräten der vorerwähnten Art anwendbar ist.

Die Aufgabe wird durch die Merkmale des Anspruchs 1 gelöst.

Die Erfindung wird durch die Merkmale der Unteransprüche weitergebildet.

In der EP-A-0 209 691 ist bereits vorgeschlagen, auf der Platine des Verbinders elektrische oder elektronische Bauelemente vorzusehen. Jedoch kann in Folge der Baugröße des Verbindergehäuses bestenfalls eine Widerstandsanpassung oder dergleichen durchgeführt werden, so daß die universelle Anwendbarkeit erheblichen Einschränkungen unterworfen ist.

Bei der erfindungsgemäßen Lösung ist ferner darauf geachtet, daß sie mit der Verbindungsvorrichtung gemäß EP-A-0 209 691 grundsätzlich kompatibel ist und darüber hinaus ferner Fehlverbindungen sicher vermieden werden können.

Das Schaltungsgehäuse weist einerseits nur Steckanschlußelemente gemäß einer einzigen Norm auf, nämlich der, die in EP-A-0 209 691 vorgeschlagen ist. Somit kann mittels der Anschlußkabel wie sie dort geschildert sind, der Anschluß an das Schaltungsgehäuse von jedem beliebigen Gerät aus erfolgen. Das Schaltungsgehäuse weist die Platine auf, die über die Steckanschlußelemente die beiden Enden der Verbindergehäuse-Teile miteinander verbindet und so die elektrische Verbindung ermöglicht. Durch die Aufnahme in dem Schaltungsgehäuse kann jedoch die Platine derart ausgebildet werden, daß sie auch Schaltungen größeren Umfanges aufnehmen kann. Darüber hinaus kann sie Betätigungs- und/oder Anzeigeelemente aufnehmen. Somit kann der Anwender,ohne die Verbindungen zwischen den zu verbindenden elektrischen Geräten ändern zu müssen, eine Umschaltung verschiedener Anwendungsfälle erreichen. Diese können angezeigt werden. Ferner können auch andere Funktionen angezeigt werden. Schließlich können elektrische Geräte unterschiedlichster Hersteller miteinander verbunden werden, da entsprechende Interface-Schaltungen und gegebenenfalls erforderliche Signalcode-Umcodierschaltungen verschiedener Systeme auf einer Platine und damit in einem einzigen Schaltungsgehäuse unterbringbar sind. Es ist lediglich erforderlich, die Anschlußkabel entsprechend anzuschließen. Dabei kann ein Fehlanschließen durch die bereits in EP-A-0 209 691 angedeutete Maßnahme des Vorsehens von Führungs- und/oder Codiernuten bzw. -rippen vermieden werden. Dies vermag auch die besondere Art der Beschriftbarkeit gemäß Anspruch 19 zu erreichen. Dies hat für den Anwender den Vorteil, daß er, wenn er eines der Geräte gegen ein anderes ein weiteren Herstellers auswechselt, nicht auch eine andere Interface-Schaltung erwerben muß, sondern lediglich ein für das neue Gerät geeignetes Anschlußkabel, das er dann nur mit entsprechenden Steckanschlüssen im Schaltungsgehäuse verbinden muß. Im gegebenen Fall könnten unter Zugrundelegung der gleichen grundsätzlichen Idee der Ausbildung einer Verbindungsvorrichtung mehrere Schaltungsgehäuse miteinander austauschbar verbunden werden, wobei auch Schaltungsgehäuse vorgesehen sein können, die keine Verbinder enthalten, an die also auch kein Anschlußkabel von einem elektrischen Gerät her anschließbar ist. Dies wird dann der Fall sein, wenn für die Interface-Schaltungen und/oder die Signalcode-Umcodierungsschaltungen ein erheblicher Aufwand erforderlich ist, der es aus Kostengründen (und Platzgründen) geraten sein läßt, nicht alle Möglichkeiten innerhalb einer in einem einzigen Schaltungsgehäuse vorgesehenen Schaltung vorzusehen. Zur Verbindung solcher verschiedener Schaltungsgehäuse ist die Grundidee gemäß EP-A-0 209 691 ebenfalls anwendbar. Dabei kann die Verbindung so erfolgen, daß über eine zwei Schaltungsgehäuse verbindende Platine die elektrische Verbindung erfolgt, wobei die Platine in in mindestens einem der Schaltungsgehäuse fest angeordnete Kupplungselemente einsteckbar ist, deren andere Enden elektrisch mit der dort angeordnete Platine verbunden sind, gegebenenfalls direkt auf diese aufgelötet sind. Dies kann für beide Schaltungsgehäuse der Fall sein. Ferner kann die Ausbildung auch derart sein, daß zwischen zwei miteinander zu koppelnden Schaltungsgehäusen ein Steckmodul angeschlossen wird, das an beiden Enden Kupplungselemente aufweist, wobei diese biegesteif miteinander verbunden sind. Innerhalb des biegesteifen Abschnitts des Steckmoduls können dabei elektrische und/oder elektronische Bauelemente vorhanden sein. Hierdurch ist eine zusätzliche weitere Programmierung bzw. Codierung möglich. Eine solche Programmierung ist auch mittels Steckmodulen möglich, die nur bei einem Schaltungsgehäuse einsteckbar sind und die entsprechende elektrische und/oder elektronische Bauelemente enthalten. Auf diese Weise könen Schaltungsgehäuse horizontal und/oder vertikal stapelbar ausgebildet sein. Ferner kann durch entsprechende Steckmodule auch eine externe Programmierung bei einem einzigen Schaltungsgehäuse erreicht werden, wobei durch geeignete Ausbildung auch durch Verdecken von Steckanschlußelementen eine zusätzliche Sicherheit gegen Fehlanschlüsse erreichbar ist.

Die nach Anspruch 19 vorgeschlagene Ausbildung der Kupplungselemente mit mindestens einem beschriftbaren Feld, ermöglicht es für den Verbraucher schnell zu erkennen, welches Kupplungselement bei seinem Anwendungsfall zu Verwenden bzw. mit welchem Verbinder es verbinden ist. Insbesondere die kombinierte Verwendung sowohl des Schaltungsgehäuses einerseits als auch des Beschriftungsfeldes andererseits, ermöglicht eine außerordentlich verbraucherfreundliche und dabei kostensparende Verbindung von Elektrogeräten, insbesondere elektronischen Geräten, selbst wenn diese zahlreiche Pole aufweisen, wie beispielsweise bei Datenverarbeitungsgeräten.

Die Erfindung wird anhand der in der Zeichnung dargesellten Ausführungsbeispiele näher erläutert. Es zeigen
- Fig. 1: den grundsätzlichen Aufbau der in der nach Art. 54(3) EPÜ zu berücksichtigenden EP-A-0 209 691 beschriebenen Verbindungsvorrichtung zur Vereinfachung der Erläuterung der vorliegenden Erfindung,
- Fig. 2: schematisch die Ausbildung der Verbindungsvorrichtung gemäß der ersten Ausführungsform der vorliegenden Erfindung,
- Fig. 3: im Teilschnitt die Anordnung gemäß Figur 2 bei nicht eingestecktem Kupplungselement,
- Fig. 4 bis 8: unterschiedliche Codier- bzw. Führungseinrichtungen an einem Verbindergehäuse-Teil,
- Fig. 9 und 10: ein Verbindergehäuse-Teil als Einzelheit in verschiedenen Darstellungen,
- Fig.11: eine andere Ausführungsform der mechanischen Verbindung zwischen Verbindergehäuseteil und Platine,
- Fig.12 und 13: zwei Ausführungsformen zur Verbindung von vertikal gestapelten Schaltungsgehäusen,
- Fig.14: ein Steckmodul zur Verbindung von übereinander angeordneten Platinen,
- Fig.15: ein Steckmodul zur Codierung bzw. Programmierung mit nur einem Kupplungselement,
- Fig.16: ein Steckmodul zur Verbindung zweier horizontal gestapelter Schaltungsgehäuse,
- Fig.17: ein Steckmodul zur externen Programmierung bzw. Codierung hinsichtlich der auf einer Platine angeordneten Schaltung,
- Fig.18: in Seitenansicht ein mit beschriftbarem Feld versehenes Kupplungselement,
- Fig.19: in Aufsicht das Kupplungselement gemäß Figur 18.

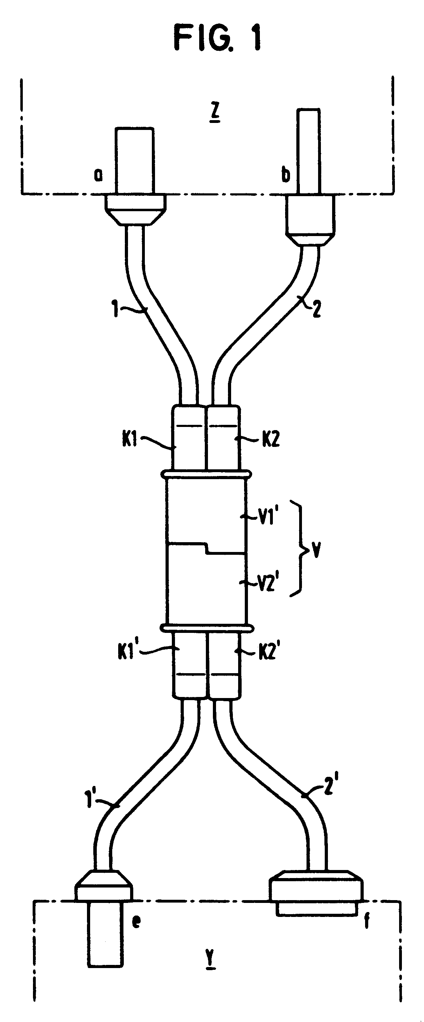

An Figur 1 wird das Grundprinzip der Verbindungsvorrichtung gemäß der EP-A-0 209 691 nochmals erläutert. In Figur 1 sind zwei Elektrogeräte Y und Z schematisch angedeutet, deren elektrische Anschlüsse a, b bzw. e, f unterschiedliche Normen aufweisen und die miteinander elektrisch zu verbinden sind. Gemäß der Erfindung nach der EP-A-0 209 691 sind Anschlußkabel 1, 2 bzw. 1', 2' vorgesehen, die an den einen Kabelenden mit Steckanschlüssen versehen sind, die den Normen der jeweiligen Elektrogeräte Y und Z entsprechen und daher in die Anschlüsse a, b bzw. e, f einsteckbar sind. An den anderen Enden weisen die Anschlußkabel 1 bis 4 Kupplungselemente K1, K2, K1' bzw. K2' auf, die als einheitliche Steckanschlüsse ausgebildet sind. Zur elektrischen Verbindung der einander funktionell zugeordneten Anschlußkabel 1 und 1' bzw. 2 und 2' dient ein Verbinder V, der aus zwei Verbinderteilen V1' und V2' besteht, in die einerseits die Kupplungselemente K1 und K2 sowie andererseits die Kupplungselemente K1' und K2' einsteckbar sind. Wie in EP-A-0 209 691 ausgeführt, enthält der Verbinder V eine Platine, die in den beiden Verbinderteilen V1' und V2' gehaltert ist, wobei die beiden Verbinderteile unlösbar miteinander verbunden sind, also insgesamt eine Baueinheit bilden. Die Platine enthält dabei Leiterbahnen, die die jeweiligen Kontaktelemente der Kupplungselemente miteinander verbinden. Wie in EP-A-0 209 691 beschrieben, können die Kupplungselemente gleiche oder unterschiedliche Anzahl von Kontaktelementen besitzen und kann der Verbinder zur Aufnahme eines oder mehrerer der Kupplungselemente geeignet sein. Wie in EP-A-0 209 691 angedeutet, erscheint eine Kontaktelementzahl von drei zweckmäßig, weshalb der Verbinder zweckmäßig eine Platine aufweist, die drei Leiterbahnen oder ganzzahliges Vielfaches davon besitzt und dabei eine entsprechende räumliche Ausbildung aufweist. Im Ausführungsbeispiel gemäß Fig. 1, unter der Voraussetzung, daß beide Kupplungselemente K1 und K2 jeweils drei Kontaktelemente aufweisen, weist die Platine des Verbinders entsprechend 6 Leiterbahnen auf.

Selbstverständlich kann jedoch dem Bedarf entsprechend auch eine andere Anzahl der Kontaktelemente vorgesehen sein. In Sonderfällen beispielsweise auch ein Kupplungselement mit einem einzigen Kontaktelement (es sei beispielsweise an Prüfzwecke gedacht).

Durch diesen Vorschlag wird die Lagerhaltung hinsichtlich der Verbindungskabel erheblich reduziert, da lediglich Anschlußkabel in einer Anzahl erforderlich sind, die der Anzahl der verschiedenen Normen entspricht. Zusätzlich sind noch Verbinder V auf Vorrat zu halten.

Wenngleich die Verbindungsvorrichtung gemäß EP-A-0 209 691 zumindest bei den meisten Audio- und Videoanwendungen mit Vorteil verwendbar ist, so gibt es jedoch Schwierigkeiten dann, wenn eine größere Anzahl von tatsächlichen elektrischen Verbindungen hergestellt werden muß, und gegebenenfalls nicht ohne weiteres eine direkte elektrische Verbindung zulässig ist. Solche Anwendungsfälle treten insbesondere bei der elektronischen Datenverarbeitung auf. Insbesondere sind dort aus Kompatibilitätsgründen nicht alle elektrischen Verbindungen zulässig.

Unter Weiterbildung des Grundgedankens der Verbindungsvorrichtung gemäß der EP-A-0 209 691 ist es jedoch möglich, eine entsprechende Verbindungsmöglichkeit zu erreichen.

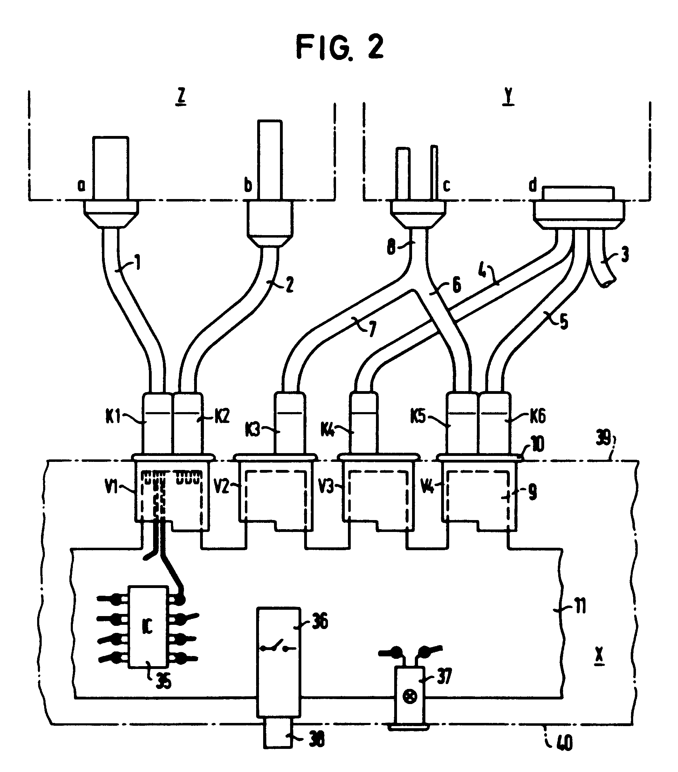

Dies sei gemäß einer ersten Ausführungsform anhand Fig. 2 erläutert.

Gemäß Fig. 2 seien ebenfalls zwei Elektrogeräte Y und Z miteinander elektrisch zu verbinden. Diese Geräte weisen ebenfalls elektrische Anschlüsse a, b bzw. c und d auf. Jedoch ist eine direkte Verbindung der beiden Geräte miteinander, sei es auf herkömmliche Weise, sei es mittels der in EP-A-0 209 691 vorgeschlagenen Weise nicht zulässig, oder in vernünftigem Ausmaße nicht möglich. Etwa weil die Anzahl der an den Anschlüssen c und d zur Verfügung stehenden Kontakte sehr groß ist wie das bei den Anschlüssen c und d des Gerätes Y schematisch angedeutet ist. Darüber hinaus sind bei Geräten der Datenverarbeitung häufig mehrere Anschlüsse gleichen Typs vorgesehen, deren Anschlußkontakte nicht vollständig belegt sind, und an die entsprechendem einem jeweiligen Anwendungsfall gesondert anzuschließen ist.

Gemäß Fig. 2 ist nun in Übereinstimmung mit der vorliegenden Erfindung ein Schaltungsgehäuse X vorgesehen, das eine Platine 11 größerer Abmessungen enthält, auf der eine gedruckte Schaltung und ferner elektrische und/oder elektronische Bauelemente unterbringbar sind. Beispielsweise sind in Fig. 2 eine integrierte Schaltung 35, ein elektrischer Schalter 36 und eine Anzeigelampe 37 vorgesehen. Der Betätigungsknopf 38 des Schalters 36 ist nach außen geführt und von außen betätigbar. Die Sichtseite des Anzeigeelements 37 weist ebenfalls nach außen, wie das dargestellt ist. Ferner weist das Gehäuse X in seiner Rückwand 39 mehrere Verbindergehäuse-Teile Vi auf, von denen im Ausführungsbeispiel insgesamt Verbindergehäuse-Teile V1, V2, V3 und V4 dargestellt sind, die entsprechend der Ausbildung nach Fig. 1 jeweils zur Aufnahme zweier Kupplungselemente Ki geeignet sind. Ferner sind verschiedene Anschlußkabel mit Kupplungselementen K1 bis K6 einerseits, sowie entsprechenden steckbaren Anschlüssen am anderen Ende zur elektrischen Verbindung mit den Anschlüssen a, b, c und d der miteinander zu verbindenden elektrischen Geräte Z und Y vorgesehen. Die Anschlußkabel 1 und 2 entsprechen im Aufbau im wesentlichen den in Fig. 1 dargestellten Anschlußkabeln 1 und 2. Das Anschlußkabel 3 ist lediglich angedeutet und ist zusammen mit Anschlußkabeln 4 und 5 gemeinsam mit dem Anschluß d des Elektrogerätes Y verbunden. Jedes der Anschlußkabel 4 und 5 trägt ein entsprechendes Kupplungselement K4 bzw. K6 am anderen Ende. Mit dem Anschluß c des Elektrogerätes Y ist ein mehradriges Anschlußkabel 8 verbunden, das sich in Kabelabschnitte 6 und 7 verzweigt, die an ihren Enden Kupplungselemente K5 bzw. K3 tragen. Die Kontaktelemente der verschiedenen Kupplungselemente K1 bis K6 sind mit entsprechenden Kontaktelementen der verschiedenen Verbindergehäuse-Teile V1 bis V4 verbunden, wobei diese Kontaktelemente auf der Platine 11 angeordnet sind. Wie dargestellt, sind nicht alle Anschlußmöglichkeiten der Verbindergehäuse-Teile ausgenutzt. Dies zeigt, daß eine unterschiedliche Belegung und damit auch Programmierung möglich ist. Dies zeigt auch, daß durch geeignete Wahl der Anzahl (n = 1,2 ... i) der Verbindergehäuse-Teile Vi und durch geeignete Ausbildung der gedruckten Schaltung auf der Platine 11 Geräte auch mehrerer unterschiedlicher Hersteller unter Verwendung eines einzigen Schaltungsgehäuses X miteinander verbindbar sind.

Ferner können vorteilhaft sämtliche Anschlüsse eines elektrischen Gerätes über entsprechende Anschlußkabel mit der auf der Platine 11 vorgesehenen gedruckten Schaltung im Schaltungsgehäuse X verbunden werden, wobei durch geeignete Auslegung der gedruckten Schaltung und Betätigung entsprechender elektrischen Schalter 36 die bisher nur durch lästiges Umstecken am elektrischen Gerät mögliche Änderung der Gerätefunktion möglich ist und entsprechend angezeigt werden kann. Das Schaltungsgehäuse X nimmt daher zweckmäßig mehrere derartige Schalter 36 auf, die ihrerseits wieder mehrere Schaltelemente aufweisen, die durch einen einzigen Betätigungsknopf 38 jeweils betätigbar sind. Solche Schalter sind handelsüblich. Auf diese Art und Weise ist eine Verbindung von Geräten unterschiedlicher Hersteller möglich. Die Platine 11 enthält zweckmäßig Interface-Schaltungen zweier oder mehrerer Hersteller-Normen, sowie Signalcode-Umcodierschaltungen, um die Geräte unterschiedlicher Hersteller, die üblicherweise nicht miteinander kompatibel sind, miteinander verbinden zu können. Dabei ist es zweckmäßig, wenn die Verbinder-Gehäuseteile Vi in einer Wand, nämlich der Rückwand 39 des Schaltungsgehäuses X angeordnet sind, während Betätigungs- und Anzeigeteile wie der Betätigungsknopf 38 und das Anzeigeelement 37 in der Vorderwand 40 des Schaltungsgehäuses X vorgesehen sind. Vorderseite 40 und Rückseite 39, insbesondere im Hinblick auf die verschiedenen Verbindergehäuse-Teile Vi können dabei gemäß einer Systemnorm beschriftet sein, um dem Verbraucher die Zuordnung der verschiedenen Kupplungselemente K1 bis K6 zu den einzelnen Verbindergehäuse-Teilen V1 bis V4 sowie den Kontaktelementen der Platine 11 zu erleichtern.

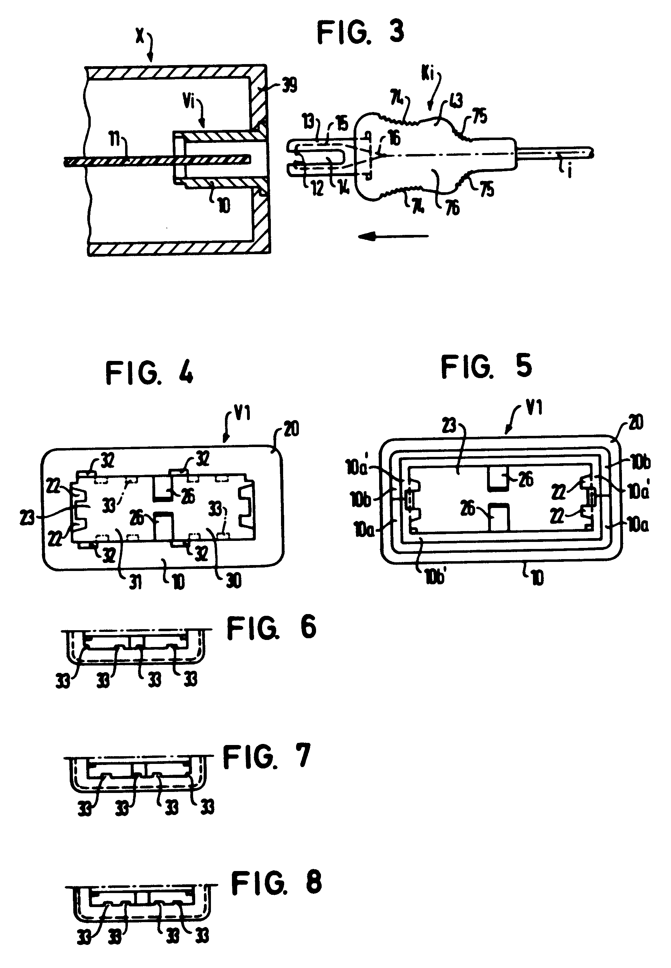

In den Fig. 4 bis 8 ist ein Verbindergehäuse-Teil V1 gemäß einem Ausführungsbeispiel im einzelnen dargestellt. Dabei ist eine Ausführungsform dargestellt, die der Bauart nach auch als Verbindergehäuse-Teil V1' bzw. V2' des Verbinders V gemäß EP-A-0 209 691 verwendbar ist. Hierdurch kann die Lagerhaltung und die Fertigung günstiger gestaltet werden.

Jedoch ist diese Ausbildung nicht zwingend erforderlich.Das Gehäuseteil 10 weist an den ins Innere des Schaltungsgehäuse X weisenden Abschnitten und Seiten verrastbare bzw. formschlüssig zusammenpaßbare und zusammensteckbare Verbindungsteile 10a, 10a', 10b und 10b' auf, über die eine Verbindung mit einem anderen Verbindergehäuse-Teil möglich wäre, wobei, wie in EP-A-0 209 691 bereits ausgeführt, beide Gehäuseteile V1' und V2' aus den erwähnten gleichen Gründen identisch ausgebildet sein sollten. Ein Teil der Verbindungsteile ist erhaben, ein anderer vertieft ausgebildet, wobei, wie in EP-A-0 209 691 erläutert, diese so ausgebildet sind, daß sie beim Zusammenstecken ineinander eingreifen und verrasten. Jedoch sind auch andere Ausführungsformen möglich.

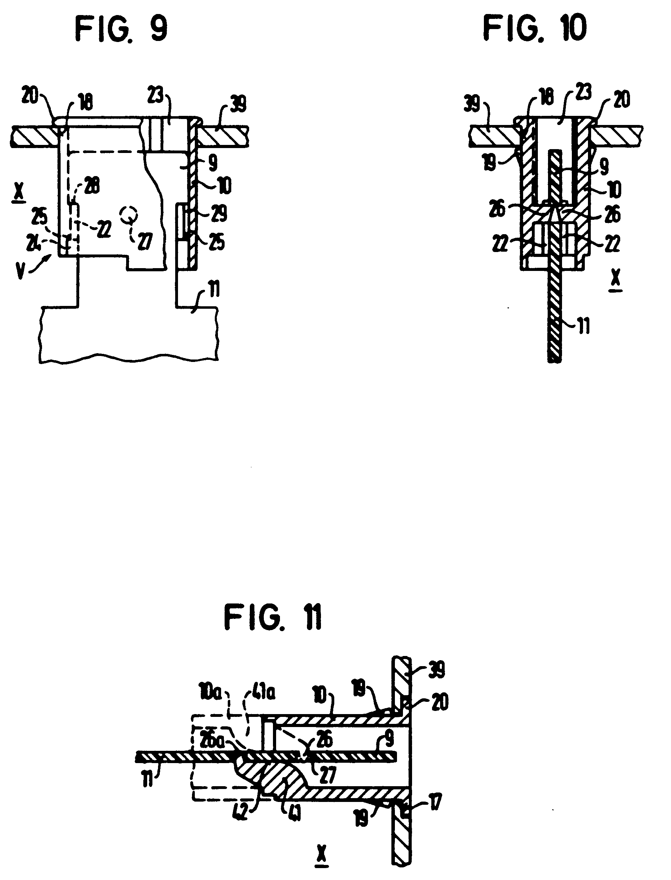

Ferner besitzt jedes Gehäuseteil 10 beidseitig des rechteckförmigen hohlen Gehäuseabschnittes ein Paar von Führungsansätzen 22 zur Führung des jeweiligen Abschnittes der Platine 11 (vgl. Fig. 2) im Zentrum des Hohlraums 23 des Gehäuseteils 10. Zu diesem Zweck weist die Platine 11 gemäß Fig. 2 entsprechende zungenartige Ansätze, kurz Zungen 9, auf, die über die Führungsansätze 22 der Gehäuseteile 10 in diese eingreifen. Die Platine 11 kann zu diesem Zweck (vgl. Fig. 9) an der Zunge 9 einen Anschlagansatz 24 aufweisen, der beim Einstecken der Platine 11 in das Gehäuseteil 10 an einem Anschlag 25 anschlägt. Hierbei verrasten Rastnoppen 26 im Gehäuseteil 10 über ihre wegragenden Enden in einer Rastöffnung 27 in der Zunge 9 der Platine 11. Jedem Verbindergehäuse-Teil V1 bis V4 ist mindestens eine solche Rastnoppen/Rastöffnungs-Verbindung zugeordnet, wie das insbesondere auch aus Fig. 10 bei der Montageendstellung erkennbar ist. Zusätzlich weist die Zunge 9 der Patine 11 Rastschultern 28 auf, die hinter Rastnocken 29 verrasten.

Wie dargestellt, sind zwei Kupplungselemente Ki in ein Verbindergehäuse-Teil Vi einsteckbar. Es sind also zwei Einstecköffnungen bzw. Einsteckhohlräume 30, 31 für weiter unten erläuterte Kupplungselemente Ki vorgesehen. Jedes Gehäuseteil 10 weist an den einander gegenüberliegenden Wänden der jeweiligen Hohlräumen 30, 31 je eine Führungsnut 32 auf, die außermittig zu den Hohlraumachsen angeordnet sind. Diese Führungsnuten 32 entsprechen grundsätzlich Führungsnuten, wie sie bei den Gehäuseteilen gemäß EP-A-0 209 691 erläutert sind und die mit entsprechenden Führungselementen an den Kupplungselementen zusammenwirken. Gemäß anderen Ausführungsformen können alternativ oder zusätzlich Codierrippen 33 in unterschiedlicher geometrischer Anordnung angeformt sein, die mit entsprechenden Codierelementen bzw. Codiernuten in den Kupplungselementen zum Zweck des unverwechselbaren Zusammensteckens von Verbinder-Steckanschluß (Kontaktelement) und entsprechendem Kupplungselement zusammenwirken. Die unterschiedliche geometrische Anordnung kann durch die Höhe, die Breite, die Form und/oder die Anzahl der verwendeten Codierrippen 33 bewirkt sein. Die geometrische Anordnung kann darüber hinaus ferner so sein, daß nach Art einer Über- und Unterordnung mehrere unterschiedlich codierte Kupplungselemente in einen Hohlraum oder umgekehrt ein eine bestimmte Codierung aufweisendes Kupplungselement in mehrere unterschiedlich codierte Hohlräume einschiebbar ist. Wie in Fig. 10 dargestellt, kann das Gehäuse 10 an der Außenseite Verrastungsnasen 19 aufweisen. Dadurch kann das Gehäuseteil 10 in der Rückwand 39 sicher festgelegt werden. Hierzu wird das Gehäuseteil 10 von außerhalb des Schaltungsgehäuses X durch eine entsprechend bemessene Öffnung 18 derart eingeschoben, daß die Verrastungsnase 19 hinter der Rückwand 39 zum Eingriff kommt, während der vorderseitige hochgezogene umlaufende Rand 20 außen anliegt oder in eine entsprechende Vertiefung 17 (Fig. 11) eingreift. Fig. 11 zeigt eine andere Ausführungsform der Rastverbindung zwischen Gehäuseteil 10 und Platine 11 bzw. deren Zunge 9. Bei diesem Ausführungsbeispiel ragt von dem Gehäuseteil 10 ein Lappen 41 flossenartig nach hinten heraus und weist am äußersten Ende einen entsprechenden Rastnoppen 26a auf, der in eine entsprechende Rastöffnung 27a der Zunge 9 eingreift. Diese Ausführungsform ist aber auch grundsätzlich bei der Verbindungsvorrichtung gemäß EP-A-0 209 691 anwendbar, da auch das andere Gehäuseteil 10a in entsprechender Weise mit flossenartig ausgebildetem Ansatz 21a mit Rastnoppen 26 ausgebildet sein kann, der dann in eine Rastöffnung 27 der Zunge 9 eingreift. Die Darstellung zeigt, daß hier sogar vollständig Kompatibilität (vgl. Fig. 9) erreicht werden kann. Jedoch können auch mehrere solcher Ansätze 41 bzw. 41a nebeneinander angeordnet sein. Der flossenartige Ansatz kann dabei zwischen der Verbindung mit dem Gehäuseteil 10 und dem Rastnoppen 26a einen Auflageabschnitt 42 für die Zunge 9 der Platine 11 besitzen, wodurch eine bessere Abstützung erreicht ist (wobei bei einem Verbinder V gemäß EP-A-0 209 691 eine verstärkte Klemmwirkung erzielt ist).

Fig. 3 zeigt schematisch den grundsätzlichen Aufbau eines Kupplungselementes Ki und dessen Zuordnung zu einem Verbindergehäuse-Teil Vi im Schaltungsgehäuse X. Das Kupplungselement Ki weist ein aus Isolierstoff bestehendes Kupplungsgehäuse 13 auf, das frontseitig einen durchgehenden Schlitz 14 besitzt. Mit Federabstand zu den Innenflächen des Steckschlitzes 14 befinden sich gabelartig geformte Kontaktenden von Kontaktfedern 15, die freien Enden der Kotaktfedern 15 besitzen Kotaktspitzen 12. Am unfreien Ende ragt aus dem Kupplungsgehäuse 13 ein Ansatz 16 an den eine Ader oder eine Abschirmung des Kabels i angelötet ist. In diesem Bereich ist das Kupplungsgehäuse 13 des Kupplungselements Ki von einer Isolierhülle 43 umgeben, die vorzugsweise durch Umspritzen hergestellt ist. Diese Isolierhülle 43 umschließt einen Teil des Kupplungsgehäuses 13 und insbesondere die Lötstelle am Ansatz 16. Das Kupplungsgehäuse 13 weist an seinen nach oben bzw. unten (Fig. 3) weisenden Flächen die entsprechenden Führungsrippen bzw. -nuten und/oder Codierrippen bzw. -nuten auf, wie sie vorstehend bei dem Gehäuse 10 erläutert sind. Wie jedoch angedeutet, können die Führungsnuten am Kupplungsgehäuse 13 und die entsprechenden Führungsrippen am Gehäuseteil 10 vorgesehen sein und umgekehrt. Gleiches gilt auch für die Codierrippen und Codiernuten. Seitlich nebeneinander angeordnete Kontaktfedern 15 im Codiergehäuse 13 sind vorzugsweise entsprechend dem bei gedruckten Schaltungen üblichen Rastermaß von 2,5 mm voneinander beabstandet.

Bei bestimmten Anwendungsformen wird es nicht ausreichen, in den Schaltungsgehäuse X eine einzige Platine 11 vorzusehen, um die für den Verwender anstrebenswerten Varianten zu ermöglichen. Ferner wird es nicht immer möglich sein, lediglich durch Vorsehen von Schaltern wie den Schaltern 36 gemäß Fig. 2 alle vom Verwender angestrebten Variaten auszuschöpfen.

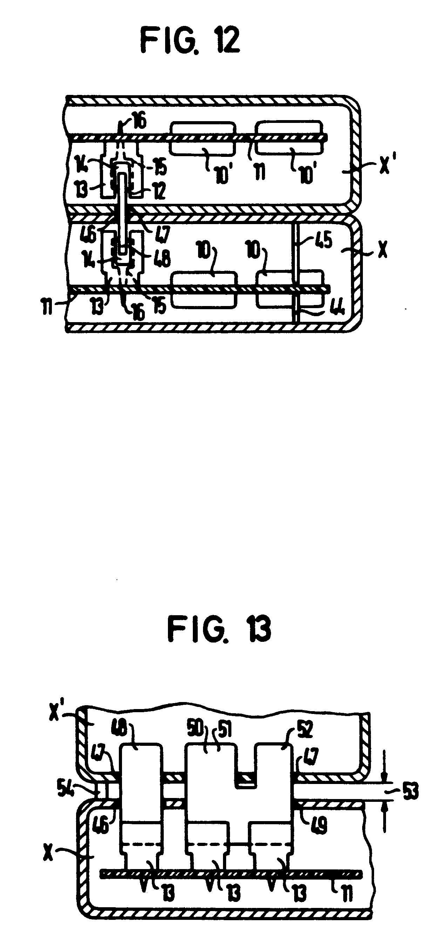

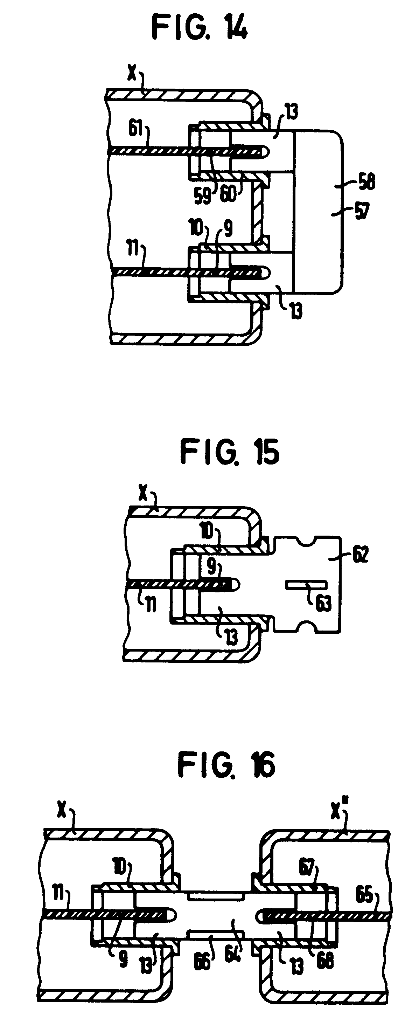

Häufig wird es erforderlich sein, mindestens eine zweite Platine in dem Schaltungsgehäuse X vorzusehen (vgl. etwa Fig. 14). In anderen Fällen wird es zweckmäßig sein, eine zusätzliche Programmierung und/oder Codierung durch Zusatzgeräte zu erreichen. Fig. 12 zeigt eine Ausführung, bei dem zusätzlich zum Schaltungsgehäuse X ein Zusatz-Schaltungsgehäuse X' vorgesehen ist. Beide Schaltungsgehäuse X und X' weisen grundsätzlich die gleiche Ausführungsform auf, sie enthalten eine Platine 11 bzw. 11', an die über Gehäuseteile 10 bzw. 10' entsprechende hier nicht dargestellte Kupplungselemente anschließbar sind. Zusätzlich können in den Gehäusen wie bei dem Schaltungsgehäuse X dargestellt, Stützen 44 und 45 zur Unterstützung der Platine 11 vorgesehen sein.

Fig. 12 zeigt eine Ausführungsform, bei der die Gehäuse X und X' vertikal stapelbar sind, nämlich dadurch, daß sie aufeinandergesetzt werden. Eine ähnliche Ausführung zeigt auch Fig. 13.

Es ist nun erforderlich, eine elektrische Verbindung, gegebenenfalls codierbar, zwischen gedruckten Schaltungen der Platinen 11 und 11' in den beiden Gehäusen X und X' zu erreichen. Dies kann unter Weiterbildung des vorerwähnten Gedankens nach der EP-A-0 209 691 erfolgen. Zu diesem Zweck können, wie dargestellt, Kupplungsgehäuse 13 über ihre unfreien Enden 16 in die jeweilige gedruckte Schaltung der Platine 11 bzw. 11' eingelötet sein. Die jeweiligen Steckschlitze liegen einander über fluchtende Gehäuseöffnungen 46 bzw. 47 gegenüber. Die elektrische Verbindung erfolgt mit Hilfe einer Leiterbahnen aufweisenden Platine 48, die den Aufbau der Platine gemäß EP-A-0 209 691 besitzen kann, derart, daß über die federnde Anlage der Kontaktspitzen 12 der Kontaktfedern 15 in den beiden Kupplungsgehäusen 13 die elektrische Verbindung erfolgt. Durch geeignete Anordnung von Kupplungsgehäusen 13 auf der Platine 11 und Kupplungsgehäusen 13 auf Platinen 11' verschiedener Zusatz-Schaltungsgehäuse X' kann eine wahlweise Programmierung und/oder Codierung durch geeignete Zuordnung erfolgen. Dabei können, wie in Fig. 13 dargestellt, auf der Platine 11 mehrere solcher Kupplungsgehäuse 13 vorgesehen sein und können mehrere Gehäuseöffnungen 46, 49 vorgesehen sein, über die Platinen 48, 50 unterschiedlicher Ausbildung einsteckbar sind. Fig. 13 zeigt ein Ausführungsbeispiel, bei dem einem Kupplungsgehäuse 13 eine Platine 48 zugeordnet ist, die durch die Öffnung 46 des Schaltungsgehäuses X hinausragt Ferner ist eine zweite U-förmige Platine 50 zwei nebeneinander angeordneten Kupplungsgehäusen 13 zugeordnet und ragt über eine entsprechend bemessene Gehäuseöffnung 49 aus dem Schaltungsgehäuse X nach außen. Dabei weist bei dem dargestellten Ausführungsbeispiel die Platine 50 auf der nach außen ragenden Seite zwei Zungen 51 und 52 auf. Auf diese Weise kann bei der Verbindung mit der Schaltung in dem Schaltungsgehäuse X' neben der Programmierung und Codierung auch noch ein Verwechslungsschutz sichergestellt werden. Bei dem in Fig. 12 dargestellten Ausführungsbeispiel war beiden Platinen 11 und 11' jeweils ein Kupplungsgehäuse 13 zugeordnet. Jedoch kann es zweckmäßig sein, nur in der Platine 11 ein solches Kupplungsgehäuse 13 vorzusehen, während die in dieses Kupplungselement 13 einzusteckende Platine 48 bzw. 50 mit der Schaltung auf der Platine 11' des Zusatz-Schaltungsgehäuses X' fest verbunden ist. Besonders auf diese Weise kann Codierung und Verwechslungsschutz sichergestellt werden. Ferner kann es zweckmäßig sein, zwischend den beiden vertikal gestapelten Schaltungsgehäusen X und X' einen schematisch dargestellten Stapelungsabstand 53 vorzusehen zu dessen Unterstützung zusätzliche Stützen 54 wie Gehäusefüße vorgesehen sein können.

Wie in Fig. 14 angedeutet, können auch in einem Gehäuse X mehrere Platinen angeordnet sein, die elektrisch miteinander verbunden sind. Fig. 14 zeigt die Platine 11 sowie eine zusätzliche Platine 61. Die Platine 61 des Schaltungsgehäuses X gem. Fig. 14 weist ähnlich wie die Platine 11 Zungen 59 auf, die ähnlich wie bei dem Gehäuseteil 10 in ein entsprechendes Gehäuseteil 60 hineinragen, das zweckmäßig die gleiche Bauart wie das Gehäuseteil 10 besitzt. Die Verbindung der gedruckten Schaltungen der beiden Platinen 11 und 61 kann innerhalb des Gehäuses X erfolgen. Jedoch ist eine externe Programmierung nach Wahl mit Hilfe eines Steckmoduls 58 möglich. Das Steckmodul 58 weist an beiden Enden Kupplungsgehäuse 13 der erläuterten Bauart auf, mittels denen eine elektrische Verbindung mit den Leiterbahnen auf den Zungen 59 bzw. 9 der beiden Platinen 61 bzw. 11 möglich ist. Innerhalb des Steckmoduls 58, nämlich dem im wesentlichen biegesteifen Verbindungsabschnitt 57 erfolgt zumindest eine direkte elektrische Verbindung, wobei nach Wahl eine Codierung möglich ist. Jedoch kann der Verbindungsabschnitt 57 auch elektrische und/oder elektronische Bauelemente enthalten, wobei grundsätzlich die gleichen Ausführungsmöglichkeiten gegeben sind, wie sie bei den Kupplungselementen gemäß EP-A-0 209 691 im Hinblick auf Codierung und Führung sowie Anzahl nebeneinander angeordneter Kontaktfedern erläutert sind.

Mit einem entsprechend bemessenen Steckmodul 58 läßt sich auch eine Verbindung der Platinen 11 und 11' zweier vertikal gestapelter Gehäuse X und X', vgl. Fig. 12, erreichen, das dann in die entsprechenden Gehäuseteile 10 bzw. 10' einzustecken sind.

Eine Codierung mittels eines Steckmoduls ist auch bei einem Schaltungsgehäuse X mit einer einzigen Platine 11 möglich, wobei ein solches Steckmodul 62, das intern eine schematisch angedeutete elektrische Schaltung 63 besitzt, lediglich ein einziges Kupplungsgehäuse 13 aufweist, das in ein Gehäuseteil 10 zur Kontaktierung der Leiterbahnen auf der entsprechenden Zunge 9 der Platine 11 vorgesehen ist. Auch hier kann durch entsprechende Auswahl des Steckmoduls 62 eine Codierung und/oder Programmierung erfolgen, wie z.B. ein Abschluß mit bestimmtem Widerstand, ein Kurzschluß oder dergleichen.

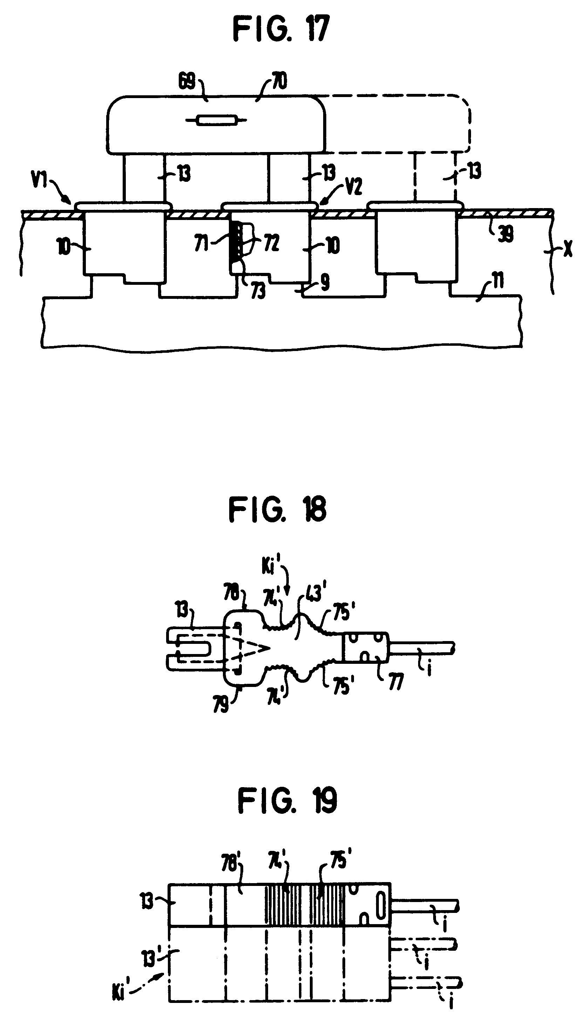

Fig. 16 zeigt eine Weiterbildung, bei der horizontal gestapelte, d.h. nebeneinander angeordnete Schaltungsgehäuse X und X'' mittels eines Steckmoduls 64 miteinander verbindbar sind. Dieses Steckmodul 64 weist an den Enden ebenfalls Kupplungsgehäuse 13 auf, die zur Kontaktierung mit den Leiterbahnen der Platine 11 im Schaltungsgehäuse X bzw. der Platine 65 im Schaltungsgehäuse X'' vorgesehen sind. Der Verbindungsabschnitt 66 kann wie der Verbindungsabschnitt 57 des Steckmoduls 58 gem. Fig. 14 lediglich Leitungen bzw. Leiterbahnen, falls erforderlich, aber auch zusätzliche elektronische Bauelemente zur Codierung und/oder Programmierung enthalten. Wie anhand Fig. 14 erläutert, ist auch in dem Schaltungsgehäuse X'' ein Gehäuseteil 67 vorgesehen, das eine entsprechende Zunge 68 der Platine 65 aufnimmt, und in die das eine Kupplungsgehäuse 13 einschiebbar ist. Zur Vermeidung von Verwechslungen können hier ebenfalls die erläuterten Führungs- und/oder Codiernuten bzw. -rippen vorgesehen sein.

Eine andere Ausführungsform zeigt Fig. 17. Hier wird mittels eines Steckmoduls 69, das elektrische Bauelemente wie Widerstände, ICs oder dergleichen im Verbindungsabschnitt 70 aufweisen kann, eine Codierung und/oder Programmierung, z.b. eine Funktionsänderung, bei der Schaltung auf der Platine 11 des Schaltungsgehäuses X erzielt. Bei dem in Fig. 17 dargestellten Ausführungsbeispiel sind ebenfalls zwei Kupplungsgehäuse 13 an den Enden vorgesehen, wobei die Ausbildung derart ist, daß bei in entsprechende Gehäuseteile 10 eingestecktem Zustand bestimmte Hohlräume (vgl. Fig. 4) der Gehäuseteile 10 nicht mehr zugänglich sind. Hierdurch kann eine Fehlschaltung bei einmal gewählter Programmierung Verhindert werden. Wie durch Strichlinien angedeutet, können auch mehr als zwei solcher Kupplungsgehäuse 13 an einem Steckmodul vorgesehen sein.

Ferner sind andere praktische Ausführungsformen von Steckmodulen möglich, beispielsweise beliebige Kombinatioen der erläuterten Steckmodule 58, 62, 64, 69.

Wie bei einem der Gehäuseteile 10 in Fig. 17 angedeutet, können die Gehäuseteile 10 eine außenliegende Hülle 71 aufweisen, wobei zwischen dieser Hülle 71 und der Gehäusewand 72 eine Metallfolie 73 vorgesehen sein kann, die eine metallische Abschirmung erzielt, wie das bereits in EP-A-0 209 691 erläutert ist. Zweckmäßig ist dabei die Abschirmung 73 elektrisch mit der Platine 11 bzw. den Leiterbahnen deren elektrischer Zunge 9 verbunden, wobei die Verbindung beispielsweise über die Rastnoppen 26 erfolgen kann, wie das in EP-A-0 209 691 erläutert ist, wozu diese eine elektrisch leitende Beschichtung oder dergleichen aufweist. Die elektrische Abschirmung kann auch durch einen elektrisch leitenden nach außen isolierten Kunststoff erfolgen.

Da bei den in Rede stehenden Anwendungsfällen häufig grundsätzlich Abschirmung vorgesehen ist, nämlich abgeschirmte Adern verwendet werden, kann es zweckmäßig sein, eine Kontaktfeder jedes Kupplungselementes 13 der Abschirmung zuzuordnen, wobei der entsprechenden Leiterbahn der Zunge 9 der Platine die entsprechende Verbindung mit der Abschirmung 73 zugeordnet ist.

Anhand Fig. 3 wurde bereits der grundsätzliche Aufbau eines Kupplungselementes Ki erläutert. Dabei kann die Isolierhülle 43 die Handhabung erleichternde Querrippen 74, 75 aufweisen. Ferner kann an den Seitenflächen 76 eine Beschriftung und/oder Markierung vorgesehen sein, wobei diese Beschriftung und/oder Markierung bereits beim Spritzvorgang durch geeignete Ausbildung der Spritzform positiv oder negativ aufgebracht werden kann. Eine damit vergleichbare Ausbildung eines Kupplungselementes Ki' zeigt Fig. 18 und Fig. 19. Wesentlich bei der Ausführung gemäß Fig. 18 ist, daß zusätzlich bereits eine Zugentlastung 77 für das Kabel i gleichzeitig mit der Isolierhülle 43' angespritzt ist. Ferner weist die Isolierhülle 43' gemäß Fig. 18 zusätzliche zur Beschriftung vorgesehene Felder 78, 79 auf, die auch im eingesteckten Zustand und bei nebeneinander Anordnung mehrerer gleichartiger Kupplungselemente Ki' sichtbar sind. Die Beschriftung kann dabei in gleicher Weise angespritzt sein, sie kann auch zusätzlich erfolgen. Fig. 19 deutet an, daß das Kupplungselement nicht nur ein Kupplungsgehäuse 13 aufweisen muß, wie es bereits erläutert worden ist, sondern wie durch Strichlinien angedeutet, ein Kupplungsgehäuse 13' größerer Breite aufweisen kann, wobei zweckmäßig die Gesamtbreite des Kupplungsgehäuses 13' einem ganzzahligen Vielfachen der Breite des Kupplungsgehäuses 13 entspricht. Eine solche Ausbildung erlaubt die feste Verbindung mehrerer Kabel i mit einem einteiligen Kupplungselement Ki'. Dadurch wird darüber hinaus ein größeres Feld 78' zur Beschriftung geschaffen, wobei durch die Nutzung der Codier- und Führungsmöglichkeiten, wie sie erläutert sind, eine Unverwechselbarkeit und Unvertauschbarkeit sichergestellt ist. Für jedes der Kabel i kann eine Zugentlastung 77 vorgesehen sein, auch können Griffrillen 74', 75' in gleicher Weise vorgesehen sein wie das vorstehend an Hand Fig. 3 erläutert worden ist.

Zur Vermeidung von Verwechslungen können zusätzlich oder neben den Codierrippen und -nuten bzw. Führungsrippen und Führungsnuten und den Beschriftungen auf den Feldern 78, 79 bzw. 78' auch unterschiedlich gefärbte Kunststoffe für das Kupplungsgehäuse 13 und/oder die Isolierhüllen 43 bzw. 43' verwendet werden.

Aus Vorstehendem ergibt sich, daß unter Weiterbildung der Verbindungsvorrichtung gemäß EP-A-0 209 691 ein System geschaffen werden kann, das universell zur Verbindung verschiedenster elektrischer und elektronischer Geräte geeignet ist. Dabei ist das System derart ausgebildet, daß unter Zugrundelegung einfacher Bauelemente für die Verbindung selbst jede beliebige elektrische Verbindung möglich ist, und zwar auch bei vergleichsweise komplizierten Geräten unterschiedlichster Hersteller, wie Datenverarbeitungsgeräten. Diese Verbindungsvorrichtung eignet sich daher in besonderer Weise auch zur Normung, zumal die Codier- und Programmiermöglichkeiten nahezu unbegrenzt sind und für die Geräte selbst schädliche Vertauschungen sicher vermieden werden können. Darüber hinaus eignet sich das anmeldungsgemäße System zur Systematisierung hinsichtlich aller Anwendungsfälle, derart, daß auch Anwender ohne besondere Vorkenntnisse die erwünschten elektrischen Verbindungen erreichen können. Insgesamt kann ein Vollständiges und kompatibles Bus-System geschaffen werden, das nicht nur kommerziell, sondern auch professionell anwendbar ist und fließende Übergänge nach Wunsch des Anwenders gestattet.

## Patentansprüche

1. Verbindungsvorrichtung für die elektrische Verbindung von elektrischen Anschlüssen von Elektrogeräten mittels hierzu passende Steckanschlüsse aufweisenden Anschlußkabeln, mit jeweils einem an einem der Anschlußkabel (1-8) befestigten Kupplungselement (K1...K6), wobei die Anschlußkabel (1-8) ferner Anschlußelemente (a,b,c,d) für die elektrische Verbindung mit den Elektrogeräten (Z, Y) besitzen, mit einem Verbinder (V1...V4) mit mindestens zwei Steckanschlüssen zur Aufnahme der Kupplungselemente (K1...K6) mindestens zweier Anschlußkabel (1-8), wobei ein Gehäuse des Verbinders zweiteilig ausgebildet ist, und
mit einer Platine mit gedruckter Schaltung (11) im Inneren des Verbinders (V1...V4), die die Verbindungsleitungen zwischen den Steckanschlüssen enthält, wobei gedruckte Leiterbahnen der Platine mit gedruckter Schaltung (11) die Steckanschlußelemente der Steckanschlüsse bilden und für die entsprechend ausgebildeten Kupplungselemente (K1...K6) nach Art eines Kontaktmessers ausgebildet sind,
wobei jedes Verbindergehäuse-Teil (10) mindestens eines Verbinders (V1...V4) unabhängig vom anderen Verbindergehäuse-Teil (10) in einer Wand (39) eines die Platine mit gedruckter Schaltung (11) und die elektrischen und/oder elektronischen Bauelemente (35-38) aufnehmenden Schaltungsgehäuses (X) angeordnet ist, und die Platine mit gedruckter Schaltung (11) für zumindest zwei der Verbindungsgehäuse-Teile (10) vorgesehen ist.

2. Verbindungsvorrichtung nach Anspruch 1,
dadurch **gekennzeichnet,**
daß das Schaltungsgehäuse (X) mehrere Verbindergehäuse-Teile (Vi; 10) aufweist.

3. Verbindungsvorrichtung nach Anspruch 1 oder 2,
dadurch **gekennzeichnet,**
daß zumindest die beiden Verbindergehäuse-Teile (Vi; 10) eines Verbinders in einer einzigen Wand (39) des Schaltungsgehäuses (X) angeordnet sind.

4. Verbindungsvorrichtung nach einem der Ansprüche 1 bis 3,
dadurch **gekennzeichnet**
daß zur horizontalen und/oder vertikalen Stapelung mehrerer Schaltungsgehäuse (X, X', X''), gegebenenfalls auch verbinderfreier Ergänzungs-Schaltungsgehäuse, externe, an beiden Enden Kupplungselemente aufweisende im wesentlichen biegesteife Steckmodule (58, 64, 69) zur elektrischen Verbindung vorgesehen sind.

5. Verbindungsvorrichtung nach einem der Ansprüche 1 bis 4,
dadurch **gekennzeichnet,**
daß zur horizontalen und/oder vertikalen Stapelung mehrerer Schaltungsgehäuse (X, X') diese innen Gehäuseöffnungen (46z, 47; 47, 49)zugeordnete Kupplungselemente (13) aufweisen, die über die gestapelt miteinander fluchtenden Gehäuseöffnungen (46, 47; 47, 49) durchgreifende Steckverbindungs-Platinen (48; 50) miteinander elektrisch verbindbar sind.

6. Verbindungsvorrichtung nach Anspruch 5,
dadurch **gekennzeichnet,**
daß mindestens eines der Kupplungselemente (13) am der Gehäuseöffnung (46, 47, 49) abgewandten Ende (16) oder einer Seitenfläche auf der Platine (11) direkt aufgebracht, insbesondere aufgelötet ist.

7. Verbindungsvorrichtung nach einem der Ansprüche 1 bis 6,
dadurch **gekennzeichnet,**
daß zur externen wahlweisen Codierung externe mindestens ein Kupplungselement (13) aufweisende (58, 62, 64, 69) Steckmodule vorgesehen sind, die zumindest Verbindungsleitungen, gegebenenfalls auch die Funktion der im Schaltungsgehäuse (X) auf der dortigen Platine (11, 61, 65) angeordneten Schaltung ändernde elektrische und/oder elektronische Bauelemente (63) enthält.

8. Verbindungsvorrichtung nach einem der Ansprüche 1 bis 7,
dadurch **gekennzeichnet,**
daß die Platine (11) wenigstens eine Rastöffnung (27, 27a) besitzt, in der ein Rastnoppen (26, 26a) des Verbindergehäuses (10) verrastbar ist.

9. Verbindungsvorrichtung nach einem der Ansprüche 1 bis 8,
dadurch **gekennzeichnet,**
daß zumindest das Verbindergehäuse-Teil (Vi; 10), gegebenenfalls auch das Schaltungsgehäuse (X) mit einer elektrischen Abschirmung (73) ausgestattet ist.

10. Verbindungsvorrichtung nach Anspruch 9,
dadurch **gekennzeichnet,**
daß das Verbindergehäuse (10), gegebenenfalls das Schaltungsgehäuse (X), mit einer Abschirmbeschichtung versehen ist.

11. Verbindungsvorrichtung nach Anspruch 9,
dadurch **gekennzeichnet,**
daß das Verbindergehäuse (10), gegebenenfalls das Schaltungsgehäuse (X), aus einen elektrisch leitenden Kunststoff besteht und von einer Isolierschicht umgeben ist.

12. Verbindungsvorrichtung nach einem der Ansprüche 9 bis 11,
dadurch **gekennzeichnet,**
daß die elektrische Verbindung der Abschirmung (73) mit der Platine (11) über die Rastnoppen (26, 26a) erfolgt.

13. Verbindungsvorrichtung nach einem der Ansprüche 1 bis 12,
dadurch **gekennzeichnet,**
daß das Verbindergehäuse (10) die Steckanschlüsse überragende Einsteckhülsen für das Kupplungselement (Ki, 13) aufweist.

14. Verbindungsvorrichtung nach einem der Ansprüche 1 bis 13,
dadurch **gekennzeichnet,**
daß das Verbindergehäuse (10) im Bereich der Steckanschlüsse in Einsteckrichtung sich erstreckende Führungsnuten (32) oder Führungsrippen für die mit entsprechenden Führungselementen versehenen Kupplungselemente (Ki; 13) aufweist.

15. Verbindungsvorrichtung nach einem der Ansprüche 1 bis 14,
dadurch **gekennzeichnet,**
daß das Verbindergehäuse (10) im Bereich der Steckanschlüsse Codiernuten oder Codierrippen (33) für die mit individuell dazu passenden Codierelementen versehenen Kupplungselemente (Ki, 13) aufweist.

16. Verbindungsvorrichtung nach einem der Ansprüche 1 bis 15,
dadurch **gekennzeichnet,**
daß das Schaltungsgehäuse (X, X', X'') mit mehreren in einer oder mehreren Ebenen angeordneten Platinen (11, 61, 65) versehen ist.

17. Verbindungsvorrichtung nach einem der Ansprüche 1 bis 16,
dadurch **gekennzeichnet,**
daß das Kupplungselement (Ki) ein Kupplungsgehäuse (13) aufweist, das frontseitig mit einem durchgehenden Steckschlitz (14) versehen ist und mindestens eine Kontaktfeder (15) enthält, die gabelartig an den sich gegenüberliegenden Seiten des Steckschlitzes (14) verläuft und mindestens eine Kontaktstelle (16) zur Kontaktierung mit dem zugeordneten Anschlußkabel (i; 1-8) aufweist.

18. Verbindungsvorrichtung nach Anspruch 17,
dadurch **gekennzeichnet,**
daß das dem Steckschlitz (14) entgegengesetzte Ende des Kupplungsgehäuses (13) sowie die Kontaktierungsstelle (16) von einer vorzugsweise umspritzten Isolierhülle (43, 43') umgeben sind.

19. Verbindungsvorrichtung nach einem der Ansprüche 1 bis 18,
dadurch **gekennzeichnet,**
daß das Kupplungselement (Ki; K1-K6) am Kupplungsgehäuse (13) mindestens ein beschriftbares Feld (76, 78, 78', 79') aufweist.

20. Verbindungsvorrichtung nach Anspruch 19,
dadurch **gekennzeichnet,**
daß das Feld auch (76, 78, 78') im in den Steckanschlug des Verbinders (Vi) eingesteckten Zustand sichtbar ist.

21. Verbindungsvorrichtung nach Anspruch 19 oder 20,
dadurch **gekennzeichnet,**
das das Feld (78, 78')auch bei mehreren nebeneinander angeordneten Kupplungselementen (Ki) sichtbar ist.

22. Verbindungsvorrichtung nach einem der Ansprüche 19 bis 21,
dadurch **gekennzeichnet**
daß das Kupplungselement (Ki) eine Zugentlastung (77) für das Anschlußkabel (i) aufweist.

23. Verbindungsvorrichtung nach einem der Ansprüche 19 bis 22,
dadurch **gekennzeichnet,**
daß das dem Steckschlitz (14) entgegengesetzte Ende des Kupplungsgehäuses (13) sowie die Kontaktstelle (16) von einer vorzugsweise umspritzten Isolierhülle (43, 43') umgeben sind.

24. Verbindungsvorrichtung nach Anspruch 22 oder 23,
dadurch **gekennzeichnet,**
daß die Zugentlastung (77) angespritzt ist.

25. Verbindungsvorrichtung nach einem der Ansprüche 19 bis 24,
dadurch **gekennzeichnet,**
daß die Beschriftung des Feldes (76, 78, 78', 79) zumindest zum Teil positiv und/oder negativ angespritzt ist.

26. Verbindungsvorrichtung nach Anspruch 15 und einem der Ansprüche 23 bis 25,
dadurch **gekennzeichnet,**
daß das Kupplungsgehäuse (13) und/oder die Isolierhülle (43, 43') verschiedenfarbig entsprechend einer mechanischen Codierung durch Codierrippen bzw. Codiernuten ausgebildet ist/sind.

## Claims

1. Connection device for the electrical connection of electrical terminals of electrical appliances by means of connecting cables having plug-in connections suitable therefor, having in each case a coupling element (K1...K6) secured to one of the connecting cables (1-8), wherein the connecting cables (1-8) also have connecting elements (a, b, c, d) for the electrical connection of electrical appliances (Z, Y), having a connector (V1...V4) with at least two plug-in connections for receiving the coupling elements (K1...K6) of at least two connecting cables (1-8), wherein a housing of the connector is formed in two parts, and
having a board with a printed circuit (11) within the connector (V1...V4) containing the connection leads between the plug-in connections, wherein printed conductors of the printed circuit board (11) form the plug-in connection elements of the plug-in connections and are constructed in the manner of a contact blade for the appropriately constructed coupling elements (K1...K6),
wherein each connector housing portion (10) having at least one connector (V1...V4) is arranged independently of the other connector housing portion (10) in a wall (39) of a circuit housing (X) receiving the printed circuit board (11) and the electrical and/or electronic components (35-38), and the board is provided with a printed circuit (11) for at least two of the connector housing portions (10).

2. Connection device according to claim 1,
characterised in that the circuit housing (X) has several connector housing portions (Vi; 10).

3. Connection device according to claim 1 or 2,
characterised in that at least the two connector housing portions (Vi; 10) of a connector are arranged in a single wall (39) of the circuit housing (X).

4. Connection device according to one of claims 1 to 3, characterised in that for the horizontal and/or vertical stacking of several circuit housings (X, X', X''), possibly also of connector-free supplementary circuit housings, external, substantially rigid plug-in modules (58, 64, 69) having coupling elements at both ends are provided for electrical connection.

5. Connection device according to one of claims 1 to 4, characterised in that for the horizontal and/or vertical stacking of several circuit housings (X, X') these inner housing apertures (46z, 47; 47, 49) have associated coupling elements (13) which can be electrically connected together by means of plug-in connection-boards (48; 50) penetrating the housing apertures (46, 47; 47, 49) stacked in alignment with each other.

6. Connection device according to claim 5,
charcaterised in that at least one of the coupling elements (13) is directly applied, in particular soldered, on the end (16) remote from the housing aperture (46, 47, 49) or on a side face on the board (11).

7. Connection device according to one of claims 1 to 6, characterised in that for external optional coding, external plug-in modules (58, 62, 64, 69) having at least one coupling element (13) are provided, which coupling element contains at least connection leads, possibly also electrical and/or electronic components (63) changing the function of the circuit arranged in the circuit housing (X) on the board (11, 61, 65) there.

8. Connection device according to one of claims 1 to 7, characterised in that the board (11) has at least one locking opening (27, 27a) in which a locking pin (26, 26a) of the connector housing (10) can be locked.

9. Connection device according to one of claims 1 to 8, characterised in that at least the connector housing portion (Vi; 10), possibly also the circuit housing (X), is equipped with an electrical shielding (73).

10. Connection device according to claim 9,
characterised in that the connector housing (10), possibly the circuit housing (X), is provided with a shielding coating.

11. Connection device according to claim 9,
characterised in that the connector housing (10), possibly the circuit housing (X), is made of an electroconductive plastic and is surounded by an insulating layer.

12. Connection device according to one of claims 9 to 11, characterised in that the shielding (73) is electrically connected to the board (11) by the locking pins (26, 26a).

13. Connection device according to one of claims 1 to 12, characterised in that the connector housing (10) has plug-in sleeves for the coupling element (Ki, 13) projecting over the plug-in connections.

14. Connection device according to one of claims 1 to 13, characterised in that the connector housing (10) has guide slots (32) or guide ribs for the coupling elements (Ki; 13) provided with corresponding guide elements in the region of the plug-in connections, extending in the plug-in direction.

15. Connection device according to one of claims 1 to 14, characterised in that in the region of the plug-in connections the connector housing (10) has coding slots or coding ribs (33) for the coupling elements (Ki; 13) provided with coding elements individually adapted thereto.

16. Connection device according to one of claims 1 to 15, characterised in that the circuit housing (X, X', X'') is provided with several boards (11, 61, 65) arranged in one or several planes.

17. Connection device according to one of claims 1 to 16, characterised in that the coupling element (Ki) has a coupling housing (13) which is provided on the front with a continuous plug-in slot (14) and contains at least one contact spring (15) which extends fork-like on the opposite sides of the plug-in slot (14) and has at least one contact point (16) for contacting with the associated connecting cable (i; 1-8).

18. Connection device according to claim 17,
characterised in that the end of the coupling housing (13) opposite the plug-in slot (14), and the contacting point (16), are surrounded by an insulating casing (43, 43') which is preferably moulded on.

19. Connection device according to one of claims 1 to 18, characterised in that the coupling element (Ki; K1-K6) on the coupling housing (13) has at least one panel (76, 78, 78', 79') which can be marked.

20. Connection device according to claim 19,
characterised in that the panel (76, 78, 78') is also visible in the plugged-in state in the plug-in connection of the connector (Vi).

21. Connection device according to claim 19 or 20,
characterised in that the panel (78, 78') is also visible with several adjacently arranged coupling elements (Ki).

22. Connection device according to one of claims 19 to 21, characterised in that the coupling element (Ki) has a strain relief (77) for the connection cable (i).

23. Connection device according to one of claims 19 to 22, characterised in that the end of the coupling housing (13) opposite the plug-in slot (14), and the contact point (16), are surrounded by an insulating casing (43, 43') which is preferably moulded on.

24. Connection device according to claim 22 or 23, characterised in that the strain relief (77) is moulded on.

25. Connection device according to one of claims 19 to 24, characterised in that the marking of the panel (76, 78, 78', 79) is moulded on at least partially positively and/or negatively.

26. Connection device according to claim 15 and one of claims 23 to 25, characterised in that the coupling housing (13) and/or the insulating casing (43, 43') is/are constructed in different colours in accordance with a mechanical coding by coding ribs or coding slots.

## Revendications

1. Dispositif de raccordement pour la liaison électrique de branchements électriques d'appareils électriques au moyen de câbles de branchement présentant des connexions enfichables adaptées à cet effet, avec chaque fois un élément de couplage (K1...K6) attaché à un des câbles de branchement (1 à 8), les câbles de branchement possédant en outre des éléments de branchement (a, b, c, d) pour la liaison électrique avec des appareils électriques (Z, Y), avec un connecteur (V1...V4) avec au moins deux prises d'enfichage pour recevoir les éléments de couplage (K1...K6) d'au moins deux câbles de branchement (1 à 8), tandis qu'un boîtier de connecteur est réalisé en deux parties, et
avec une platine à circuit imprimé (11) à l'intérieur du connecteur (V1...V4), qui contient les conducteurs de liaison entre les connexions à enfichage, tandis que des pistes conductrices imprimées de la platine à circuit imprimé (11) constituent les éléments de connexion par enfichage des prises d'enfichage et sont conformées à la manière d'une lame de contact pour les éléments de couplage (K1...K6) conformés de manière correspondante,
dans lequel chaque partie du boîtier (10) de connecteur d'au moins un connecteur (V1...V4), indépendamment de l'autre partie du boîtier (10) de connecteur, est disposée dans une paroi (39) d'un boîtier (X) de circuit recevant la platine à circuit imprimé (11) et les éléments de construction (35 à 38) électriques et/ou électroniques, et la platine à circuit imprimé (11) est prévue pour au moins deux des parties (10) du boîtier de connexion.

2. Dispositif de raccordement selon la revendication 1, caractérisé en ce que le boîtier (X) du circuit présente plusieurs parties (Vi; 10) du boîtier de connecteur.

3. Dispositif de raccordement selon la revendication 1 ou 2, caractérisé en ce qu'au moins les deux parties (Vi; 10) du boîtier de connecteur sont disposées dans une seule paroi (39) du boîtier (X) du circuit.

4. Dispositif de raccordement selon une des revendications 1 à 3, caractérisé en ce que, pour l'empilement horizontal et/ou vertical de plusieurs boîtiers de circuits (X, X', X'') et aussi, le cas échéant de boîtiers de circuits complémentaires dépourvus de connecteur, des modules à enfichage externes (58, 64, 69) essentiellement rigides à la flexion, présentant sur leur deux extrémités des éléments de couplage, sont prévus pour la liaison électrique.

5. Dispositif de raccordement selon une des revendications 1 à 4, caractérisé en ce que, pour l'empilement horizontal et/ou vertical de plusieurs boîtiers de circuits (X, X') ceux-ci présentent intérieurement des éléments de couplage (13) associés à des ouvertures (46_{z}' 47; 47, 49) du boîtier, pouvant être reliés électriquement entre eux par l'intermédiaire de platines (48; 50) de connexion à enfichage traversant les ouvertures (46, 47; 47, 49) des boîtiers empilés, alignés les uns avec les autres.

6. Dispositif de raccordement selon la revendication 5, caractérisé en ce qu'au moins un des éléments de couplage (13) est monté directement, en particulier soudé, sur la platine (11) sur l'extrémité opposée (16) à l'ouverture (46, 47, 49) du boîtier ou sur une surface latérale de la platine (11).

7. Dispositif de raccordement selon une des revendications 1 à 6, caractérisé en ce que, pour le codage externe, au choix, des modules à enfichage externes (58, 62, 64, 69) présentant au moins un élément de couplage (13) sont prévus, qui contiennent au moins des conducteurs de liaison, le cas échéant aussi des éléments de construction (63) électriques et/ou électroniques modifiant la fonction du circuit disposé dans le boîtier (X) sur la platine (11, 61, 65) se trouvant dans ce boîtier.

8. Dispositif de raccordement selon une des revendications 1 à 7, caractérisé en ce que la platine (11) possède au moins une ouverture d'encliquetage (27, 27a) dans laquelle s'accroche un cran d'arrêt (26, 26a) du boîtier de connecteur (10).

9. Dispositif de raccordement selon une des revendications 1 à 8, caractérisé en ce qu'au moins la partie (Vi; 10) du boîtier de connecteur, le cas échéant aussi le boîtier de circuit (X) est équipé d'un blindage électrique (73).

10. Dispositif de raccordement selon la revendication 9, caractérisé en ce que le boîtier de connecteur (10), le cas échéant le boitier de circuit (X), est muni d'un revêtement de blindage.

11. Dispositif de raccordement selon la revendication 9, caractérisé en ce que le boîtier de connecteur (10), le cas échéant le boîtier de circuit (X), est en matière plastique électro-conductrice et est entouré d'une couche d'isolation.

12. Dispositif de raccordement selon une des revendications 9 à 11, caractérisé en ce que la liaison électrique du blindage (73) avec la platine (11) a lieu par l'intermédiaire des crans d'encliquetage (26, 26a).

13. Dispositif de raccordement selon une des revendications 1 à 12, caractérisé en ce que le boîtier de connecteur (10) présente des douilles d'enfichage dépassant hors des prises d'enfichage pour l'élément de couplage (Ki, 13).

14. Dispositif de raccordement selon une des revendications 1 à 13, caractérisé en ce que le boîtier de connecteur (10) présente dans la zone des prises d'enfichage des rainures de guidage (32) ou des nervures de guidage s'étendant dans le sens d'enfichage pour les éléments de couplage (Ki; 13) munis d'éléments de guidage correspondants.

15. Dispositif de raccordement selon une des revendications 1 à 14, caractérisé en ce que le boîtier de connecteurs (10) présente dans la zone des prises d'enfichage des rainures de codage ou des nervures de codage (33) pour les éléments de couplage (Ki; 13) munis individuellement d'éléments de codage s'adaptant à celles-ci.

16. Dispositif de raccordement selon une des revendications 1 à 15, caractérisé en ce que le boîtier de circuit (X, X', X'') est muni de plusieurs platines (11, 61, 65) disposées dans un plan ou dans plusieurs plans.

17. Dispositif de raccordement selon une des revendications 1 à 16, caractérisé en ce que l'élément de couplage (Ki) présente un boîtier de couplage (13) qui est muni sur sa face frontale d'une fente d'enfichage continue (14) et contient au moins une lame élastique de contact (15) s'étendant à la façon d'une fourche sur les côtés opposés de la fente d'enfichage (14) et présentant au moins un point de contact (16) pour la mise en contact avec le câble de branchement (i; 1 à 8) associé.

18. Dispositif de raccordement selon la revendication 17, caractérisé en ce que l'extrémité du boîtier de couplage (13) opposée à la fente d'enfichage (14) ainsi que les points de contact (16) sont entourés d'une gaine d'isolation (43, 43'), de préférence surmoulée.

19. Dispositif de raccordement selon une des revendications 1 à 18, caractérisé en ce que l'élément de couplage (Ki; K1...L6) présente sur le boîtier de couplage (13) au moins une surface inscriptible (76, 78, 78', 79').

20. Dispositif de raccordement selon la revendication 19, caractérisé en ce que la surface inscriptible (76, 78, 78') est également visible dans la situation où la fiche du connecteur (Vi)est enfichée.

21. Dispositif de raccordement selon la revendication 19 ou 20, caractérisé en ce que la surface inscriptible (78, 78') est également visible dans le cas où plusieurs éléments de couplage (Ki) sont disposés côte à côte.

22. Dispositif de raccordement selon une des revendications 19 à 21, caractérisé en ce que l'élément de couplage (Ki) présente une décharge de traction (77) pour le câble de branchement (i).

23. Dispositif de raccordement selon une des revendications 19 à 22, caractérisé en ce que l'extrémité du boîtier de couplage (13) opposée à la fente d'enfichage (14), ainsi que le point de contact (16) sont entourés d'une gaine isolante (43, 43'), de préférence surmoulée.

24. Dispositif de raccordement selon la revendication 22 ou 23, caractérisé en ce que la décharge de traction (77) est surmoulée.

25. Dispositif de raccordement selon une des revendications 19 à 24, caractérisé en ce que l'inscription du panneau d'identification (76, 78, 78', 79) est réalisée au moins en partie par surmoulage positif et/ou négatif.

26. Dispositif de raccordement selon la revendication 15 et une des revendications 23 à 25, caractérisé en ce que le boîtier de couplage (13) et/ou la gaine isolante (43, 43') est ou sont réalisés en couleurs différentes correspondant à un codage mécanique au moyen de nervures de codage et de rainures de codage.
